# EUROPEAN PATENT APPLICATION

(11) **EP 4 783 551 A1**
(43) Date of publication of application: **29.07.2026**
(21) Application number: 24866899.8
(22) Date of filing: 28.05.2024
(51) Int. Cl.: H04L 67/10, H04L 67/61

(54) **QUALITY EVALUATION METHOD AND APPARATUS FOR CLOUD SERVICE ARCHITECTURE**

(30) Priority: 21.09.2023 CN 202311225944; 22.01.2024 CN 202410088954
(71) Applicant: Huawei Cloud Computing Technologies Co., Ltd., Gui'an New District, Guizhou 550025 (CN)
(72) Inventor: YANG, Haifeng, Guiyang, Guizhou 550025 (CN); DANG, Qi, Guiyang, Guizhou 550025 (CN); HUANG, Haonan, Guiyang, Guizhou 550025 (CN)
(74) Representative: Maiwald GmbH
(86) International application number: PCT/CN2024/095731
(87) International publication number: WO 2025/060478

(57) **Abstract**

Embodiments of this application disclose a cloud service architecture quality evaluation method, to improve design quality of a cloud service architecture. The method in embodiments of this application includes: displaying a cloud architecture diagram, where the cloud architecture diagram represents a cloud service architecture, the cloud architecture diagram includes a first cloud graphical element and a second cloud graphical element, the first cloud graphical element corresponds to a first cloud service, the second cloud graphical element corresponds to a second cloud service, and there is an integration relationship between the first cloud service and the second cloud service in the cloud service architecture; evaluating the integration relationship between the first cloud service and the second cloud service based on at least one of the following information: types of the first cloud service and the second cloud service, a communication mode between the first cloud service and the second cloud service, and communication content between the first cloud service and the second cloud service; and displaying an integration relationship evaluation result between the first cloud service and the second cloud service to a user.

## Description

This application claims priorities to Chinese Patent Application No. 202311225944.4, filed with the China National Intellectual Property Administration on September 21, 2023 and entitled "CLOUD ARCHITECTURE EVALUATION METHOD, SYSTEM, AND DEVICE", and to Chinese Patent Application No. 202410088954.6, filed with the China National Intellectual Property Administration on January 22, 2024 and entitled "CLOUD SERVICE ARCHITECTURE QUALITY EVALUATION METHOD AND APPARATUS", both of which are incorporated herein by reference in their entireties.

### TECHNICAL FIELD

Embodiments of this application relate to the computer field, and in particular, to a cloud service architecture quality evaluation method and apparatus.

### BACKGROUND

With rapid development of cloud computing, more enterprises choose to use cloud computing technologies to resolve service problems of the enterprises. On the cloud, cloud vendors provide various types of cloud services, including hundreds of basic cloud services. The enterprises do not need to use all these cloud services to resolve the service problems of the enterprises based on cloud computing. Usually, solution architects need to select some of these basic cloud services for integration, and design a cloud service architecture of a solution, to form the solution to resolve the service problems.

However, the cloud service architecture design of the solution depends heavily on experience. Usually, only experienced architects can design a high-quality solution architecture. The architects need to have a comprehensive understanding of all functions, applicable scenarios, specifications, and performance of the cloud services, differences and limitations between similar cloud services, and the like. In addition, the integration relationship between cloud services is highly complex, and the iteration and update are fast. Designers need to understand cloud services and an integration relationship in real time to complete high-quality architecture design.

Currently, after completing solution design, the solution architects need to perform quality evaluation and solution verification on the cloud service architecture, to ensure that a finally delivered solution meets requirements. Currently, a cloud service architecture quality evaluation process depends on experienced architects for evaluation. The evaluation takes a long time and may not be comprehensive, causing poor solution design effects of the cloud service architecture.

### SUMMARY

Embodiments of this application provide a cloud service architecture quality evaluation method. In the method, a compute device can perform, based on an integration relationship knowledge graph, quality evaluation on a cloud service architecture designed by an architect, and provide a recommended integration relationship in the cloud service architecture, thereby improving design quality and design efficiency of the cloud service architecture. Embodiments of this application further provide a cloud service architecture quality evaluation apparatus, a compute device, a compute device cluster, a computer-readable storage medium, and a computer program product that correspond to the cloud service architecture quality evaluation method.

According to a first aspect, an embodiment of this application provides a cloud service architecture quality evaluation method. The method may be performed by a compute device of a cloud service platform, or may be performed by a component of the compute device, for example, a processor, a chip, or a chip system of the compute device, or may be implemented by a logical module or software that can implement all or some functions of the compute device. The method provided in the first aspect includes: The compute device displays a cloud architecture editing interface, where the cloud architecture editing interface includes at least one graphical element selection area, the graphical element selection area includes at least one cloud graphical element, and the cloud graphical element corresponds to at least one cloud service. The compute device obtains a graphical element selection instruction of a user for a first cloud graphical element, where the first cloud graphical element corresponds to a first cloud service; and obtains a graphical element selection instruction of the user for a second cloud graphical element, where the second cloud graphical element corresponds to a second cloud service. The compute device displays a cloud architecture diagram, where the cloud architecture diagram represents a cloud service architecture, the cloud architecture diagram includes the first cloud graphical element and the second cloud graphical element, there is an integration relationship between the first cloud service and the second cloud service in the cloud service architecture, and the integration relationship is represented in at least one of the following manners: a connection line between the first cloud graphical element and the second cloud graphical element in the cloud architecture diagram, and an inclusion relationship between the first cloud graphical element and the second cloud graphical element in the cloud architecture diagram. The compute device evaluates the integration relationship between the first cloud service and the second cloud service based on at least one of the following information: types of the first cloud service and the second cloud service, a communication mode between the first cloud service and the second cloud service, and communication content between the first cloud service and the second cloud service, where the communication content between the first cloud service and the second cloud service includes at least one of the following: communication data content between the first cloud service and the second cloud service, and a communication data format between the first cloud service and the second cloud service, and the communication mode between the first cloud service and the second cloud service includes at least one of the following: a communication protocol between the first cloud service and the second cloud service, and a communication path between the first cloud service and the second cloud service. The compute device displays an integration relationship evaluation result between the first cloud service and the second cloud service to the user.

In this embodiment of this application, the compute device can provide the cloud architecture editing interface to design the cloud service architecture, perform, based on related information of the cloud service architecture, quality evaluation on the cloud service architecture designed by the user, and display the integration relationship evaluation result of the cloud service architecture, so that the user can update the cloud service architecture based on the integration relationship evaluation result, thereby improving design quality of the cloud service architecture.

In a possible implementation, the compute device provides a dependency relationship evaluation result between the first cloud service and a third cloud service based on dependency relationship information, where the third cloud service may be a cloud service to be designed by the user, and the dependency relationship information includes at least one of the following: a strong dependency relationship and a recommended dependency relationship, the strong dependency relationship is that at least one of the first cloud service and the third cloud service exists by being bound to another cloud service, and the recommended dependency relationship is that at least one of the first cloud service and the third cloud service is recommended to coexist with another cloud service. The compute device displays the dependency relationship evaluation result between the first cloud service and the third cloud service to the user, where the dependency relationship evaluation result includes at least one of the following: lacking at least one cloud service, and recommending adding at least one cloud service.

In this embodiment of this application, the compute device can perform, based on the dependency relationship information of the cloud service architecture, dependency evaluation on the cloud service architecture designed by the user, and display the dependency relationship evaluation result of the cloud service architecture, so that the user can update the cloud service architecture based on content of the dependency relationship evaluation result, thereby improving the design quality of the cloud service architecture.

In a possible implementation, in a process in which the compute device evaluates the integration relationship between the first cloud service and the second cloud service, the compute device parses the cloud service architecture to obtain an integration relationship between cloud services included in the cloud service architecture. The compute device performs integration relationship retrieval in an integration relationship knowledge graph based on the integration relationship between the cloud services, to determine an associated integration relationship, where the associated integration relationship is used to determine an integration relationship evaluation result between the cloud services, and the integration relationship knowledge graph is used to store an integration relationship between different cloud services.

In this embodiment of this application, the compute device can obtain the integration relationship between the cloud services in the cloud service architecture through parsing, and compare the associated integration relationship in the integration relationship knowledge graph with the integration relationship between the cloud services obtained through parsing, to obtain a quality evaluation result of an integration relationship between a plurality of cloud services in the cloud service architecture, thereby improving the design quality of the cloud service architecture.

In a possible implementation, the compute device constructs the integration relationship knowledge graph based on integration relationship data, where the integration relationship knowledge graph includes a node and an edge, the node represents a cloud service, the edge represents an integration relationship between cloud services, and the integration relationship data between cloud services includes historical integration relationship data between different cloud services.

In this embodiment of this application, the compute device can construct the integration relationship knowledge graph based on the historical integration relationship data between the cloud services, and perform quality evaluation on the cloud service architecture based on the knowledge graph, thereby improving accuracy of the integration relationship knowledge graph and implementability of evaluating the cloud service architecture by the compute device.

In a possible implementation, the integration relationship evaluation result includes one or more of the following: the integration relationship is unknown, the integration relationship is forbidden, the integration relationship is not recommended, the integration relationship is optional, and the integration relationship is preferred.

In this embodiment of this application, the compute device generates a plurality of different types of integration relationship evaluation results, thereby improving accuracy of the quality evaluation result of the cloud service architecture.

In a possible implementation, when the integration relationship evaluation result is that the integration relationship is forbidden or the integration relationship is not recommended, the compute device displays, to the user, a reason why the integration relationship is forbidden or the integration relationship is not recommended, and the compute device may further display, to the user, a corresponding modification suggestion for the integration relationship being forbidden or the integration relationship being not recommended.

In this embodiment of this application, the compute device can further display an evaluation reason and a modification suggestion corresponding to the integration relationship evaluation result, thereby improving integrity of the quality evaluation result.

In a possible implementation, there is a mapping relationship between the integration relationship evaluation result and an integration relationship quality score, and a recommendation degree in the integration relationship evaluation result is associated with the integration relationship quality score.

In this embodiment of this application, each cloud service integration relationship included in the cloud service architecture generated by the compute device corresponds to a quality score, thereby improving the accuracy of the quality evaluation result of the cloud service architecture.

In a possible implementation, the compute device provides a quality evaluation interface, where the quality evaluation interface is used to perform integration relationship evaluation on different cloud service architectures. The compute device receives an integration relationship evaluation request through the quality evaluation interface, and sends, through the quality evaluation interface, an integration relationship evaluation result corresponding to the integration relationship evaluation request.

In this embodiment of this application, the compute device provides the quality evaluation interface on a display interface, so that the user can invoke the quality evaluation interface in real time in a design process of the cloud service architecture to generate the quality evaluation result of the cloud service architecture, thereby improving evaluation efficiency and real-time performance of quality evaluation on the cloud service architecture.

In a possible implementation, when the integration relationship quality score corresponding to the integration relationship evaluation result is greater than a score threshold, the cloud service architecture is re-modified. When the integration relationship quality score corresponding to the integration relationship evaluation result is less than or equal to the score threshold, the cloud service architecture is submitted for cloud service architecture review and cloud service architecture verification.

In this embodiment of this application, after the quality evaluation result of the cloud service architecture is qualified, the compute device can perform cloud service architecture review and cloud service architecture verification on the cloud service architecture, thereby further improving the design quality of the cloud service architecture.

In a possible implementation, the compute device displays a recommended integration relationship, where the recommended integration relationship includes at least two cloud services, and an evaluation result of the recommended integration relationship takes priority over the integration relationship evaluation result between the first cloud service and the second cloud service.

In this embodiment of this application, the compute device can provide the recommended integration relationship, and the evaluation result of the recommended integration relationship takes priority over an integration relationship evaluation result in current design, thereby improving design quality of the integration relationship between the cloud services.

In a possible implementation, the compute device displays a recommended integration relationship set, where the recommended integration relationship set includes a first recommended integration relationship and a second recommended integration relationship, in the recommended integration relationship set, the first recommended integration relationship takes priority over the second recommended integration relationship in terms of displaying, and an evaluation result of the first recommended integration relationship takes priority over an evaluation result of the second recommended integration relationship, that is, the recommended integration relationships in the recommended integration relationship set may be sorted based on a recommendation priorities for display.

In this embodiment of this application, the compute device can provide a plurality of groups of recommended integration relationships to form a recommended integration relationship set, and perform recommendation sorting on the recommended integration relationships in the recommended integration relationship set based on integration relationship evaluation results, thereby improving the design quality of the integration relationship between the cloud services.

According to a second aspect, an embodiment of this application further provides a cloud service architecture quality evaluation method. The method may be performed by a compute device of a cloud service platform, or may be performed by a component of the compute device, for example, a processor, a chip, or a chip system of the compute device, or may be implemented by a logical module or software that can implement all or some functions of the compute device. The method provided in the second aspect includes: obtaining a cloud service architecture, where the cloud service architecture is a cloud service architecture created by a user on the cloud service platform; performing quality evaluation on the cloud service architecture based on an integration relationship knowledge graph, to generate a quality evaluation result, where the integration relationship knowledge graph indicates an integration rule between different cloud services, and the integration rule includes one or more of the following: an integration relationship type and an integration relationship priority; and displaying the quality evaluation result on a display interface of the cloud service platform, where the quality evaluation result indicates a score of one or more integration relationships in the cloud service architecture.

In this embodiment of this application, the compute device can perform, based on the integration relationship knowledge graph, quality evaluation on the cloud service architecture designed by the user, and display the quality evaluation result of the cloud service architecture on the display interface, so that the user can update the designed cloud service architecture based on the quality evaluation result of the cloud service architecture, thereby improving design quality and design efficiency of the cloud service architecture.

In a possible implementation, in a process of performing quality evaluation on the cloud service architecture based on the integration relationship knowledge graph, the compute device performs integration relationship parsing on the cloud service architecture to obtain an integration relationship between cloud services in the cloud service architecture; performs retrieval in the integration relationship knowledge graph based on the integration relationship between the cloud services to determine an associated integration relationship in the integration relationship knowledge graph, where the associated integration relationship is used to evaluate design quality of the integration relationship between the cloud services; and generates the quality evaluation result based on the associated integration relationship and the integration relationship between the cloud services.

In this embodiment of this application, the compute device can obtain the integration relationship between the cloud services in the cloud service architecture through parsing, and compare the associated integration relationship in the integration relationship knowledge graph with the integration relationship between the cloud services obtained through parsing, to obtain a quality evaluation result of an integration relationship between a plurality of cloud services in the cloud service architecture, thereby improving the design quality of the cloud service architecture.

In a possible implementation, the compute device constructs the integration relationship knowledge graph based on integration relationship data, where the integration relationship knowledge graph includes a node and an edge, the node represents a cloud service, the edge represents an integration relationship between cloud services, and the integration relationship data between cloud services includes historical data of the integration relationship between the cloud services.

In this embodiment of this application, the compute device can construct the integration relationship knowledge graph based on the historical data of the integration relationship between the cloud services, and perform quality evaluation on the cloud service architecture based on the knowledge graph, thereby improving accuracy of the integration relationship knowledge graph and implementability of evaluating the cloud service architecture by the compute device.

In a possible implementation, there are a plurality of different types of cloud services, and the different types of cloud services include a cloud computing service, a cloud container service, a cloud storage service, and a cloud network service. The cloud computing service includes, for example, an elastic cloud server ECS, a bare metal server BMS, and an image management service IMS. The cloud container service includes, for example, a cloud container engine CCE and software repository for container SWR. The cloud storage service includes, for example, an elastic volume service EVS, a scalable file service SFS, and an object storage service OBS. The cloud network service includes, for example, a virtual private cloud VPC, an elastic IP EIP, elastic load balance ELB, and a network address translation NAT gateway.

In this embodiment of this application, there are a plurality of different types of cloud services, and the compute device can perform quality evaluation on a cloud service architecture having different types of cloud services, thereby improving applicability of the cloud service architecture quality evaluation method.

In a possible implementation, the compute device may define the integration relationship type in the knowledge graph. The integration relationship type between the cloud services in the knowledge graph includes a main type and a subtype. The main type includes network protocol integration, data storage integration, middleware integration, dependency integration, other integration, and the like. A subtype of the main network protocol integration type includes TCP/UDP protocol integration and HTTP protocol integration, and a subtype of the main data storage integration type includes object storage integration, file storage integration, and block storage integration.

In this embodiment of this application, the compute device may define the integration relationship type in the knowledge graph, and further generate the integration relationship knowledge graph based on the integration relationship type, thereby improving the accuracy of the integration relationship knowledge graph.

In a possible implementation, the quality evaluation result includes one or more of the following: the integration relationship is unknown, the integration relationship is forbidden, the integration relationship is not recommended, the integration relationship is optional, and the integration relationship is preferred. Different quality evaluation results correspond to different quality scores. The evaluation result of the cloud service architecture is positively correlated or may be negatively correlated with the quality score. This is not specifically limited.

In this embodiment of this application, the compute device generates a plurality of different types of quality evaluation results, thereby improving accuracy of the quality evaluation result of the cloud service architecture.

In a possible implementation, a quality evaluation result of each integration relationship in the cloud service architecture corresponds to one quality score, and the compute device may calculate a total quality score of the cloud service architecture based on the integration relationship included in the cloud service architecture.

In this embodiment of this application, each cloud service integration relationship included in the cloud service architecture generated by the compute device corresponds to a quality score, thereby improving the accuracy of the quality evaluation result of the cloud service architecture.

In a possible implementation, the compute device provides a quality evaluation interface on the display interface, where the quality evaluation interface is used to provide the quality evaluation result of the integration relationship in the cloud service architecture in real time in a design process of the cloud service architecture. In the design process of the cloud service architecture, the compute device may invoke the quality evaluation interface in real time to perform quality evaluation on the cloud service architecture that is being designed, to generate the quality evaluation result.

In this embodiment of this application, the compute device provides the quality evaluation interface on the display interface, so that the user can invoke the quality evaluation interface in real time in the design process of the cloud service architecture to generate the quality evaluation result of the cloud service architecture, thereby improving evaluation efficiency and real-time performance of quality evaluation on the cloud service architecture.

In a possible implementation, the compute device provides a recommended integration relationship of the cloud service architecture on the display interface based on the quality evaluation interface, and the recommended integration relationship is determined based on the integration relationship knowledge graph.

In this embodiment of this application, in addition to performing quality evaluation on the cloud service architecture, the compute device can further provide the recommended integration relationship of the cloud service architecture on the display interface, and the user can design the cloud service architecture based on the recommended integration relationship, thereby improving the design quality and the design efficiency of the cloud service architecture.

In a possible implementation, the compute device provides, on the display interface based on the quality evaluation interface, a cloud graphical element corresponding to the recommended integration relationship. The user can design the cloud service architecture based on the cloud graphical element provided on the display interface. When the user selects a cloud graphical element to create the cloud service architecture, the compute device may display, on the display interface, a quality evaluation result of an integration relationship between a created cloud service and the cloud graphical element.

In this embodiment of this application, the compute device provides, on the display interface, the cloud graphical element corresponding to the recommended integration relationship of the cloud service architecture, so that the user can quickly create the cloud service architecture based on the cloud graphical element, thereby improving the design quality and the design efficiency of the cloud service architecture.

In a possible implementation, when the score corresponding to the quality evaluation result is less than or equal to a score threshold, the cloud service architecture is submitted for cloud service architecture review and cloud service architecture verification. Specifically, after the cloud service architecture passes the quality evaluation performed by the compute device, the user may perform cloud service architecture review on the cloud service architecture. The cloud service architecture review may be manual review. After passing the manual review, the cloud service architecture may be further verified. After passing the verification, the cloud service architecture may be delivered.

In this embodiment of this application, after the quality evaluation result of the cloud service architecture is qualified, the compute device can perform cloud service architecture review and cloud service architecture verification on the cloud service architecture, thereby further improving the design quality of the cloud service architecture.

According to a third aspect, an embodiment of this application provides a cloud service architecture quality evaluation apparatus, used in a cloud service platform. The cloud service platform is used to manage a cloud service architecture, the cloud service architecture includes at least two cloud services, and the apparatus includes an obtaining unit, a processing unit, and a display unit. The display unit is configured to display a cloud architecture editing interface, where the cloud architecture editing interface includes at least one graphical element selection area, the graphical element selection area includes at least one cloud graphical element, and the cloud graphical element corresponds to at least one cloud service. The obtaining unit is configured to obtain a graphical element selection instruction of a user for a first cloud graphical element, where the first cloud graphical element corresponds to a first cloud service. The obtaining unit is further configured to obtain a graphical element selection instruction of the user for a second cloud graphical element, where the second cloud graphical element corresponds to a second cloud service. The display unit is further configured to display a cloud architecture diagram, where the cloud architecture diagram represents the cloud service architecture, the cloud architecture diagram includes the first cloud graphical element and the second cloud graphical element, there is an integration relationship between the first cloud service and the second cloud service in the cloud service architecture, and the integration relationship is represented in at least one of the following manners: a connection line between the first cloud graphical element and the second cloud graphical element in the cloud architecture diagram, and an inclusion relationship between the first cloud graphical element and the second cloud graphical element in the cloud architecture diagram. The processing unit is configured to evaluate the integration relationship between the first cloud service and the second cloud service based on at least one of the following information: types of the first cloud service and the second cloud service, a communication mode between the first cloud service and the second cloud service, and communication content between the first cloud service and the second cloud service, where the communication content between the first cloud service and the second cloud service includes at least one of the following: communication data content between the first cloud service and the second cloud service, and a communication data format between the first cloud service and the second cloud service, and the communication mode between the first cloud service and the second cloud service includes at least one of the following: a communication protocol between the first cloud service and the second cloud service, and a communication path between the first cloud service and the second cloud service. The display unit is further configured to display an integration relationship evaluation result between the first cloud service and the second cloud service to the user.

In a possible implementation, the processing unit is further configured to provide a dependency relationship evaluation result between the first cloud service and a third cloud service based on dependency relationship information, where the dependency relationship information includes at least one of the following: a strong dependency relationship and a recommended dependency relationship, the strong dependency relationship is that at least one of the first cloud service and the third cloud service exists by being bound to another cloud service, and the recommended dependency relationship is that at least one of the first cloud service and the third cloud service is recommended to coexist with another cloud service. The display unit is further configured to display the dependency relationship evaluation result between the first cloud service and the third cloud service to the user, where the dependency relationship evaluation result includes at least one of the following: lacking at least one cloud service, and recommending adding at least one cloud service.

In a possible implementation, the processing unit is further configured to: parse the cloud service architecture to obtain an integration relationship between the cloud services included in the cloud service architecture; and perform integration relationship retrieval in an integration relationship knowledge graph based on the integration relationship between the cloud services, to determine an associated integration relationship, where the associated integration relationship is used to determine an integration relationship evaluation result between the cloud services, and the integration relationship knowledge graph is used to store an integration relationship between different cloud services.

In a possible implementation, the processing unit is further configured to construct the integration relationship knowledge graph based on integration relationship data, where the integration relationship knowledge graph includes a node and an edge, the node represents a cloud service, the edge represents an integration relationship between cloud services, and the integration relationship data between cloud services includes historical integration relationship data between different cloud services.

In a possible implementation, the integration relationship evaluation result includes one or more of the following: the integration relationship is unknown, the integration relationship is forbidden, the integration relationship is not recommended, the integration relationship is optional, and the integration relationship is preferred.

In a possible implementation, the display unit is further configured to: when the integration relationship evaluation result is that the integration relationship is forbidden or the integration relationship is not recommended, display, to the user, a reason why the integration relationship is forbidden or the integration relationship is not recommended.

In a possible implementation, there is a mapping relationship between the integration relationship evaluation result and an integration relationship quality score, and a recommendation degree in the integration relationship evaluation result is associated with the integration relationship quality score.

In a possible implementation, the processing unit is further configured to: provide a quality evaluation interface, where the quality evaluation interface is used to perform integration relationship evaluation on different cloud service architectures; and receive an integration relationship evaluation request through the quality evaluation interface, and send, through the quality evaluation interface, an integration relationship evaluation result corresponding to the integration relationship evaluation request.

In a possible implementation, the processing unit is further configured to: when the integration relationship quality score corresponding to the integration relationship evaluation result is greater than a score threshold, re-modify the cloud service architecture; or when the integration relationship quality score corresponding to the integration relationship evaluation result is less than or equal to the score threshold, submit the cloud service architecture for cloud service architecture review and cloud service architecture verification.

In a possible implementation, the display unit is further configured to display a recommended integration relationship, where the recommended integration relationship includes at least two cloud services, and an evaluation result of the recommended integration relationship takes priority over the integration relationship evaluation result between the first cloud service and the second cloud service.

In a possible implementation, the display unit is further configured to display a recommended integration relationship set, where the recommended integration relationship set includes a first recommended integration relationship and a second recommended integration relationship, in the recommended integration relationship set, the first recommended integration relationship takes priority over the second recommended integration relationship in terms of displaying, and an evaluation result of the first recommended integration relationship takes priority over an evaluation result of the second recommended integration relationship.

According to a fourth aspect, an embodiment of this application provides a compute device. The compute device includes a processor, the processor is coupled to a memory, and the memory is configured to store instructions. When the instructions are executed by the processor, the compute device is enabled to perform the method according to any one of the first aspect or the possible implementations of the first aspect.

According to a fifth aspect, an embodiment of this application provides a compute device cluster. The compute device cluster includes one or more compute devices, the compute device includes a processor, the processor is coupled to a memory, and the memory is configured to store instructions. When the instructions are executed by the processor, the compute device cluster is enabled to perform the method according to any one of the first aspect or the possible implementations of the first aspect.

According to a sixth aspect, an embodiment of this application provides a computer-readable storage medium. The computer-readable storage medium stores instructions. When the instructions are executed, a computer is enabled to perform the method according to any one of the first aspect or the possible implementations of the first aspect.

According to a seventh aspect, an embodiment of this application provides a computer program product. The computer program product includes instructions. When the instructions are executed, a computer is enabled to implement the method according to any one of the first aspect or the possible implementations of the first aspect.

It may be understood that, for beneficial effects that can be achieved by any one of the foregoing provided cloud service architecture quality evaluation apparatus, compute device, compute device cluster, computer-readable medium, computer program product, or the like, refer to beneficial effects in the corresponding method. Details are not described herein again.

### BRIEF DESCRIPTION OF DRAWINGS

FIG. 1 is a diagram of a system architecture of a cloud service architecture quality evaluation system according to an embodiment of this application;
FIG. 2 is a schematic flowchart of a cloud service architecture quality evaluation method according to an embodiment of this application;
FIG. 3a is a diagram of a display interface of a cloud service architecture according to an embodiment of this application;
FIG. 3b is a schematic flowchart of another cloud service architecture quality evaluation method according to an embodiment of this application;
FIG. 4a is a diagram of creating an integration relationship knowledge graph according to an embodiment of this application;
FIG. 4b is a diagram of data corresponding to a cloud service architecture according to an embodiment of this application;
FIG. 5 is a diagram of another display interface of a cloud service architecture according to an embodiment of this application;
FIG. 6a is a diagram of another display interface of a cloud service architecture according to an embodiment of this application;
FIG. 6b is a diagram of another display interface of a cloud service architecture according to an embodiment of this application;
FIG. 7 is a diagram of a cloud service architecture quality evaluation apparatus according to an embodiment of this application;
FIG. 8 is a diagram of a structure of a compute device according to an embodiment of this application;
FIG. 9 is a diagram of a structure of another compute device according to an embodiment of this application; and
FIG. 10 is a diagram of a structure of another compute device cluster according to an embodiment of this application.

### DESCRIPTION OF EMBODIMENTS

Embodiments of this application provide a cloud service architecture quality evaluation method and apparatus, to improve design quality of a cloud service architecture.

In the specification, claims, and accompanying drawings of this application, the terms "first", "second", "third", "fourth", and the like (if existent) are intended to distinguish between similar objects but do not necessarily indicate a specific order or sequence. It should be understood that data used in such a way are interchangeable in appropriate circumstances, so that embodiments described herein can be implemented in an order other than the content illustrated or described herein. In addition, the terms "include", "have", and any variants thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner.

First, some terms in embodiments of this application are described, to help a person skilled in the art understand the technical solutions.

Elastic cloud server (elastic cloud server, ECS): is an elastic scaling cloud server instance. Users may quickly create, configure, and manage virtual servers based on requirements of the users.

Bare metal server (bare metal server, BMS): is a physical server leasing service on the cloud. The bare metal server may provide, for the users, physical servers on which multi-layer virtualization is not performed, and the users may control server hardware and operating system environments.

Elastic volume service (elastic volume service, EVS): is storage space that provides persistent block storage services for computing services such as ECSs and BMSs. The users may perform formatting, file system creation, and the like on the elastic volume service, and persistently store data on the elastic volume service.

Object storage service (object storage service, OBS): is an object-based storage service that provides, for customers, massive, secure, highly reliable, and cost-effective data storage capabilities without considering a capacity restriction when the object storage service is used. In addition, the object storage service provides a plurality of storage types for selection, to meet requirements of the customers in various service scenarios.

Virtual private cloud (virtual private cloud, VPC): is an isolated and private virtual network environment that the users apply for on the cloud.

Elastic IP (Elastic IP): is a public IP address that can be dynamically bound or unbound, and is used to provide reliable public network access for cloud resources such as cloud servers and load balancers.

Elastic load balance (Elastic Load Balance, ELB): automatically distributes access traffic to a plurality of cloud servers, to expand external service capabilities of application systems and reduce load and complexity of the cloud servers.

To make the technical solutions of this application clearer and easier to understand, the following describes a system architecture of this application with reference to the accompanying drawings.

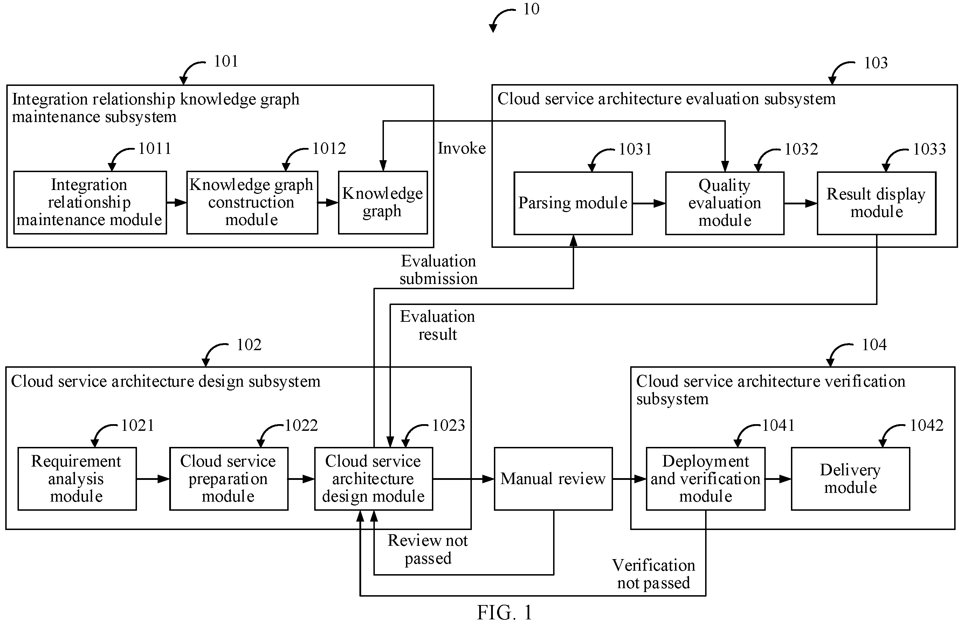

FIG. 1 is a diagram of a system architecture of a cloud service architecture quality evaluation system according to an embodiment of this application. In the example shown in FIG. 1, the cloud service architecture quality evaluation system 10 includes an integration relationship knowledge graph maintenance subsystem 101, a cloud service architecture design subsystem 102, a cloud service architecture evaluation subsystem 103, and a cloud service architecture verification subsystem 104. The following describes specific functions of the subsystems in the cloud service architecture quality evaluation system 10.

The integration relationship knowledge graph maintenance subsystem 101 is configured to generate a knowledge graph of an integration relationship between cloud services, where the knowledge graph describes an optional integration relationship between the cloud services, and a priority and an integration type of the integration relationship. The integration relationship knowledge graph maintenance subsystem 101 includes an integration relationship maintenance module 1011 and a knowledge graph construction module 1012.

The integration relationship maintenance module 1011 is configured to: define an integration rule between different cloud services based on a historical integration relationship between the cloud services and experience of an integration architect, and record point data and edge data in the integration relationship knowledge graph maintenance subsystem 101 according to the defined integration rule. The point data is a cloud service, and the edge data is an integration relationship between cloud services and an integration relationship priority.

The knowledge graph construction module 1012 is configured to standardize the point data and the edge data recorded by the integration relationship maintenance module 1011. The knowledge graph construction module 1012 stores the cloud services, the integration relationship between the cloud services, and the integration relationship priority in a graph system, to obtain the knowledge graph of the integration relationship between the cloud services. The knowledge graph of the integration relationship between the cloud services is used as a reference standard for the cloud service architecture evaluation subsystem 103 to perform quality evaluation on a cloud service architecture.

The cloud service architecture design subsystem 102 is configured to design the cloud service architecture. The cloud service architecture design subsystem 102 provides an architecture editing interface for the cloud service architecture design. A user may design the cloud service architecture and create a design drawing of the cloud service architecture on the architecture editing interface.

The cloud service architecture design subsystem 102 includes a requirement analysis module 1021, a cloud service preparation module 1022, and a cloud service architecture design module 1023. The requirement analysis module 1021 is configured to analyze a service scenario and a design requirement of the cloud service architecture design. The cloud service preparation module 1022 is configured to: collect, based on the design requirement, related cloud services forming the cloud service architecture, and provide information about the related cloud services. The cloud service architecture design module 1023 is configured to design and generate the cloud service architecture of the cloud services. The cloud service architecture design module 1023 is further configured to invoke, in a process of designing the cloud service architecture, a quality evaluation interface provided by the cloud service architecture evaluation subsystem 103, to generate a quality evaluation result of the cloud service architecture in real time.

The cloud service architecture evaluation subsystem 103 is configured to perform quality evaluation on the cloud service architecture of the cloud services based on the knowledge graph. The knowledge graph is the integration relationship knowledge graph generated by the integration relationship knowledge graph maintenance subsystem 101, and the cloud service architecture of the cloud services is the cloud service architecture designed by the cloud service architecture design subsystem 102. The cloud service architecture evaluation subsystem 103 provides the quality evaluation interface of the cloud service architecture, and the cloud service architecture design module 1023 may invoke the quality evaluation interface to generate the quality evaluation result of the cloud service architecture.

It may be understood that the cloud service architecture evaluation subsystem 103 may perform quality evaluation on a cloud service architecture that is being designed by the cloud service architecture design subsystem 102, or may perform quality evaluation on a cloud service architecture that has been designed by the cloud service architecture design subsystem 102. This is not specifically limited.

The cloud service architecture evaluation subsystem 103 includes a parsing module 1031, a quality evaluation module 1032, and a result display module 1033. The parsing module 1031 is configured to parse the cloud service architecture that is being designed or has been designed, to obtain cloud services included in the cloud service architecture and an integration relationship between the cloud services. The quality evaluation module 1032 is configured to: compare the integration relationship obtained through parsing with the integration rule maintained in the knowledge graph, and generate a quality evaluation result of each integration relationship according to a preset evaluation rule. The result display module 1033 is configured to display the quality evaluation result of the cloud service architecture on a display interface.

The cloud service architecture verification subsystem 104 is configured to perform final verification and testing on the cloud service architecture. Specifically, based on a diagram and a configuration list of the cloud service architecture that has been designed, the cloud service architecture verification subsystem 104 creates the corresponding cloud service architecture on a cloud service platform and completes actual deployment of the cloud service architecture. The cloud service architecture verification subsystem 104 designs various test cases such as a function test, a performance test, a reliability test, and a security test based on an actual scenario of the cloud service architecture, tests the cloud service architecture based on the test cases, and delivers the cloud service architecture after the test is passed.

The cloud service architecture verification subsystem 104 includes a deployment and verification module 1041 and a delivery module 1042. The deployment and verification module 1041 is configured to: perform actual deployment on the cloud service architecture based on the cloud service architecture that has been designed, and test the cloud service architecture based on the test cases. The delivery module 1042 is configured to deliver the cloud service architecture that has been tested.

It should be noted that the subsystems in the cloud service architecture quality evaluation system 10 may be implemented by using software, or may be implemented by using hardware. This is not specifically limited.

When the cloud service architecture quality evaluation system 10 is implemented by using the software, the cloud service architecture quality evaluation system 10 may be an application program running on a compute device. Each subsystem runs in the compute device as an application program, and is provided, through an interface, for a browser or a third-party application program for invoking. The compute device is, for example, a server of any type of public cloud or private cloud. When the cloud service architecture quality evaluation system 10 is implemented by using the hardware, each subsystem in the cloud service architecture quality evaluation system 10 may be a compute device, a processing circuit, or the like.

Based on the cloud service architecture quality evaluation system 10 shown in FIG. 1, this application further provides a cloud service architecture quality evaluation method. The following describes, with reference to embodiments, the cloud service architecture quality evaluation method provided in embodiments of this application.

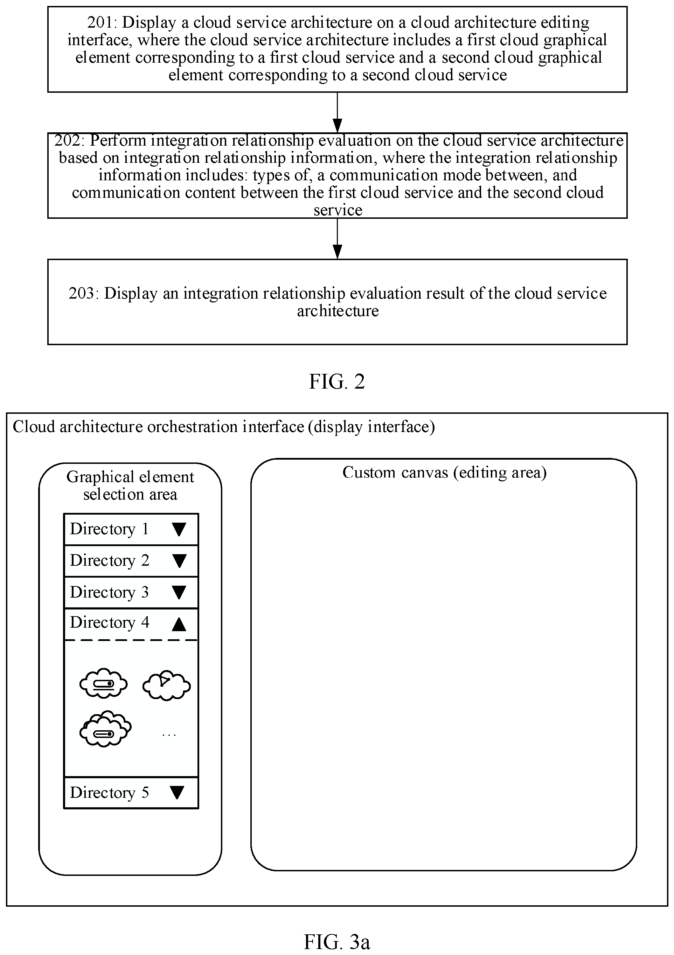

FIG. 2 is a schematic flowchart of a cloud service architecture quality evaluation method according to an embodiment of this application. In the example shown in FIG. 2, the method includes the following steps.

201: Display a cloud service architecture on a cloud architecture editing interface, where the cloud service architecture includes a first cloud graphical element corresponding to a first cloud service and a second cloud graphical element corresponding to a second cloud service.

The cloud service architecture quality evaluation system 10 first obtains the cloud service architecture, where the cloud service architecture is a cloud service architecture created by a user on the cloud architecture editing interface. Specifically, the user performs cloud service architecture design on cloud services based on the cloud service architecture design subsystem 102, including design requirement analysis, cloud service selection, cloud service architecture creation, and the like. For example, in a design process of the cloud service architecture, the user may select, on the cloud architecture editing interface, different cloud services provided by a cloud service platform, and create and configure the cloud service architecture of the cloud services.

The cloud service architecture quality evaluation system 10 provides the cloud architecture editing interface. The cloud architecture editing interface includes at least one graphical element selection area, the graphical element selection area includes at least one cloud graphical element, and in the cloud service architecture quality evaluation system 10, the at least one cloud graphical element corresponds to at least one cloud service.

The user may edit the first cloud graphical element and the second cloud graphical element on the cloud architecture editing interface. The cloud service architecture quality evaluation system 10 obtains a graphical element selection instruction of the user for the first cloud graphical element, where the first cloud graphical element corresponds to the first cloud service; and obtains a graphical element selection instruction of the user for the second cloud graphical element, where the second cloud graphical element corresponds to the second cloud service. The cloud service architecture quality evaluation system 10 displays a cloud architecture diagram on the cloud architecture editing interface, where the cloud architecture diagram represents the cloud service architecture, there is an integration relationship between the first cloud service and the second cloud service in the cloud service architecture, and the integration relationship is represented in at least one of the following manners: a connection line between the first cloud graphical element and the second cloud graphical element in the cloud architecture diagram, and an inclusion relationship between the first cloud graphical element and the second cloud graphical element in the cloud architecture diagram.

FIG. 3a is a diagram of a cloud architecture editing interface according to an embodiment of this application. In the example shown in FIG. 3a, the left side is a graphical element selection area, and the right side is a custom canvas. The graphical element selection area includes cloud graphical elements that can be selected in cloud architecture design. The custom canvas is an editing area for the cloud architecture design. The user may display a selected cloud graphical element on the custom canvas.

In embodiments of this application, the cloud graphical element is a graphical identifier of a minimum unit, and is also referred to as a graphical element. For example, in management of one cloud service resource, two or more cloud services may be integrated to form one server cluster. Each cloud graphical element may identify a type, a basic specification, and the like of one cloud service. In a possible implementation, one cloud graphical element may represent a set of more than two cloud services. A quantity and types of specific cloud services represented by the cloud graphical element are not limited herein. In embodiments of this application, the cloud graphical element may be an element with a fixed size, or may be an element of a table, wireframe, or connection line type. This is not limited in this application.

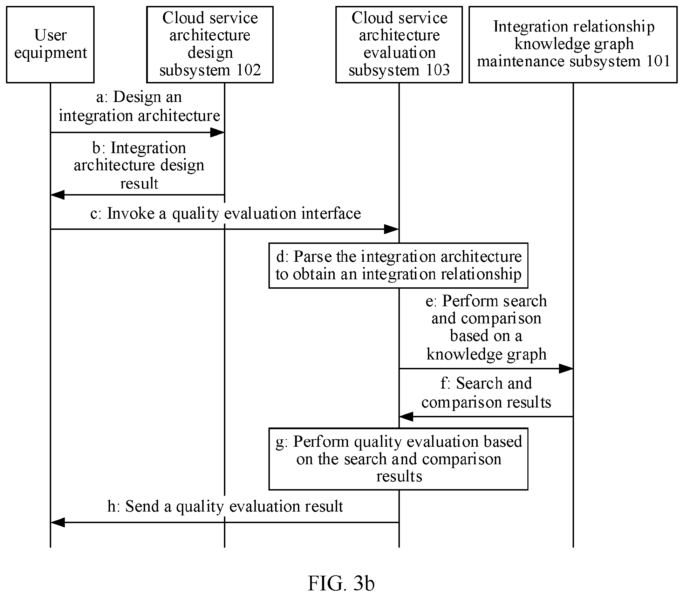

FIG. 3b is a schematic flowchart of a cloud service architecture quality evaluation method according to an embodiment of this application. In step a and step b in the example shown in FIG. 3b, a user performs cloud service architecture design on cloud services based on the cloud service architecture design subsystem 102, and the user inputs a service scenario and a design requirement into the cloud service architecture design subsystem 102, and creates a cloud service architecture based on the design requirement, to obtain the cloud service architecture of the cloud services. For example, the user creates a virtual private cloud VPC on a display interface of a cloud service platform, and creates an elastic cloud server ECS, an object storage service OBS, and an elastic volume service EVS in the virtual private cloud VPC. In addition, the user establishes a strong dependency relationship between the virtual private cloud VPC and the elastic cloud server ECS on the display interface of the cloud service platform.

In embodiments of this application, there are a plurality of different types of cloud services, for example, including a cloud computing service, a cloud container service, a cloud storage service, and a cloud network service. The cloud computing service includes, for example, an elastic cloud server ECS, a bare metal server BMS, and an image management service IMS. The cloud container service includes, for example, a cloud container engine CCE and software repository for container SWR. The cloud storage service includes, for example, an elastic volume service EVS, a scalable file service SFS, and an object storage service OBS. The cloud network service includes, for example, a virtual private cloud VPC, an elastic IP EIP, elastic load balance ELB, and a network address translation NAT gateway.

In this embodiment of this application, after performing cloud service architecture design on the cloud services based on the cloud service architecture design subsystem 102, the user invokes the cloud service architecture evaluation subsystem 103 to perform quality evaluation on the cloud service architecture. In this case, the cloud service architecture evaluation subsystem 103 obtains the cloud service architecture. Before performing quality evaluation on the cloud service architecture, the cloud service architecture evaluation subsystem 103 first needs to construct an integration relationship knowledge graph. The following provides descriptions.

In a possible implementation, the cloud service architecture evaluation subsystem 103 constructs the integration relationship knowledge graph based on integration relationship data, where the integration relationship knowledge graph includes nodes and an edge, the nodes represent cloud services, the edge represents an integration relationship between the cloud services, and the integration relationship data between cloud services includes historical data of the integration relationship between the cloud services. The following specifically describes a process in which the cloud service architecture evaluation subsystem 103 constructs the integration relationship knowledge graph based on the integration relationship data.

First, the cloud service architecture evaluation subsystem 103 needs to define a type of the integration relationship between the cloud services, and maintain the integration relationship data between cloud services based on the defined integration relationship type and the historical data of the integration relationship between the cloud services. The following specifically describes the type of the integration relationship between the cloud services.

Table 1 is a schematic table of a type definition of an integration relationship according to an embodiment of this application. It can be learned from the example shown in Table 1 that the integration relationship type between the cloud services includes a main type and a subtype. The main type includes network protocol integration, data storage integration, middleware integration, dependency integration, other integration, and the like. Each main integration type further includes a subtype. For example, a subtype of the data storage integration type includes object storage integration, file storage integration, and block storage integration.

**Table 1**

| Main type | Subtype | Description |
|---|---|---|
| Network protocol integration | TCP/UDP | Data is exchanged between services through invoking according to a TCP/UDP protocol. |
| | HTTP/HTTPS | Data is exchanged between services through invoking according to an HTTP/HTTPS protocol. |
| Data storage integration | Object storage | There is a data storage integration relationship between services, and a data storage type is the object storage. |
| | File storage | There is a data storage integration relationship between services, and a data storage type is the file storage. |
| | Block storage | There is a data storage integration relationship between services, and a data storage type is the block storage. |
| Middleware integration | Application integration | Services are integrated through establishment of application systems, middleware, and the like in the middle. |
| Dependency integration | Strong dependency | There is a coexistence integration relationship between services, where this rule is mandatory, and a depended-on service needs to exist. |
| Other integration | None | There is no clear dependency relationship between services, and this identifies a scenario in which services can be integrated but an integration relationship is not clear. |

Second, the cloud service architecture evaluation subsystem 103 maintains the integration relationship between the cloud services based on the defined integration relationship type, and generates the integration relationship knowledge graph. The integration relationship knowledge graph includes the nodes and the edge, where the nodes represent the cloud services, and the edge represents an integration relationship between cloud services. The following separately describes the nodes and the edge in the integration relationship knowledge graph.

In a possible implementation, the node in the integration relationship knowledge graph includes a node identifier and a node label, where the node identifier identifies a cloud service, and the node label describes properties of the cloud service, for example, a name and a type.

Table 2 is a schematic table of a node identifier and a node label according to an embodiment of this application. In the example shown in Table 2, the node identifier includes a name abbreviation of a cloud service, and the node label includes a name and a type. For example, a node identifier of the elastic cloud server is the ECS, a name is the elastic cloud server, and a type is a compute node.

**Table 2**

| Node identifier (ID) | Node label (label) | |
|---|---|---|
| | Property 1 (property 1): name | Property 2 (property 2): type |
| ECS | Elastic cloud server | Compute |
| BMS | Bare metal server | |
| IMS | Image management service | |
| CCE | Cloud container engine | Container |
| SWR | Software repository for container | |
| EVS | Elastic volume service | Storage |
| SFS | Scalable file service | |
| OBS | Object storage service | |
| VPC | Virtual private cloud | Network |
| EIP | Elastic IP | |
| ELB | Elastic load balance | |
| NAT | NAT gateway | |

In a possible implementation, the edge in the integration relationship knowledge graph includes an edge label and two node identifiers corresponding to the edge, where the node identifier identifies a cloud service, and the edge label describes properties between cloud services, for example, an integration type, an integration type description, and an integration relationship priority.

Table 3 is a schematic table of node identifiers and an edge label according to an embodiment of this application. In the example shown in Table 3, a node identifier 1 and a node identifier 2 are respectively cloud services connected to the edge in the integration relationship knowledge graph, and the edge label includes an integration type, an integration type description, and an integration relationship priority. For example, an integration type between the elastic cloud server ECS and the elastic volume service EVS is block storage, an integration type description is that the elastic cloud server ECS may be attached to the elastic volume service EVS, and an integration relationship priority is 4.

**Table 3**

| Node identifier 1 (ID 1) | Node identifier 2 (ID 2) | Edge label (label) | | |
|---|---|---|---|---|
| | | Property 1 (property 1): integration type | Property 2 (property 2): integration type description | Property 3 (property 3): integration relationship priority |
| ECS | EVS | Block storage | The ECS may be attached to the EVS service for use. | 4 |
| ECS | EVS | HTTP/HTTPS | An EVS API may be invoked in the ECS. | 1 |
| ECS | OBS | Object storage | The ECS may invoke the OBS through an API. | 4 |
| ECS | SFS | File storage | The ECS may interconnect with the SFS service through file storage. | 4 |

| ECS | IMS | Strong dependency | The ECS strongly depends on the IMS service, and needs, for running, an image provided by the IMS service. | Maximum value |
|---|---|---|---|---|
| ECS | IMS | HTTP/HTTPS | An IMS API may be invoked in the ECS. | 1 |
| ECS | VPC | Strong dependency | The ECS strongly depends on the VPC service. | Maximum value |

Table 4 is a schematic table of an integration relationship priority according to an embodiment of this application. In the example shown in Table 4, there are five priorities: levels 1 to 4 and a max level of integration relationships between cloud services. The level 1 indicates that an integration relationship is forbidden, the level 2 indicates that an integration relationship is not recommended, the level 3 indicates that an integration relationship is optional, the level 4 indicates that an integration relationship is preferred, and the max level indicates that an integration relationship is mandatory.

**Table 4**

| Integration relationship priority | Meaning |
|---|---|
| max | Mandatory priority, for example, a strong dependency relationship |
| 4 | Preferred priority |
| 3 | Optional priority |
| 2 | Priority that is not recommended |
| 1 | Forbidden priority, indicating that although a service supports this type of integration relationship, this type of integration relationship may cause problems |

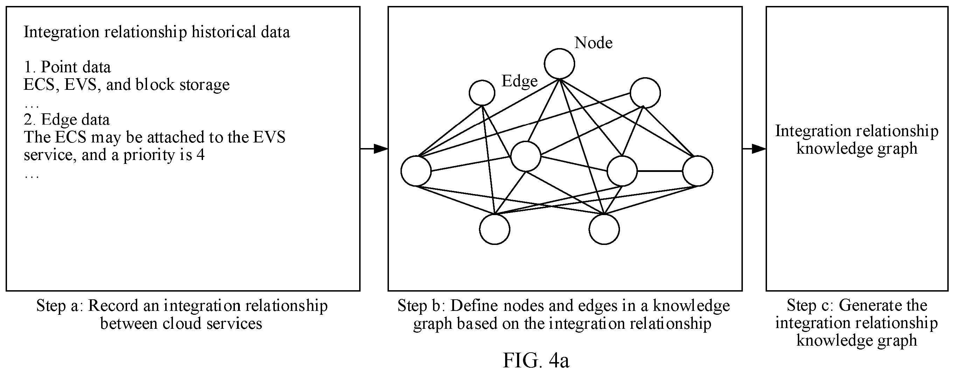

FIG. 4a is a diagram of generating an integration relationship knowledge graph according to an embodiment of this application. In step a in the example shown in FIG. 4a, the integration relationship knowledge graph maintenance subsystem 101 first defines a type of an integration relationship between cloud services, and records the integration relationship between the cloud services based on historical data of cloud service integration.

In step b and step c in the example shown in FIG. 4a, after recording the integration relationship between the cloud services, the integration relationship knowledge graph maintenance subsystem 101 standardizes the recorded integration relationship between the cloud services based on a knowledge graph structure, to generate a knowledge graph of the integration relationship between the cloud services.

Specifically, the integration relationship knowledge graph maintenance subsystem 101 maintains nodes and an edge in the knowledge graph based on the integration relationship between the cloud services, to obtain the knowledge graph of the integration relationship. The integration relationship knowledge graph maintenance subsystem 101 creates the nodes in the knowledge graph based on the cloud services, and creates the edge in the knowledge graph based on the integration relationship between the cloud services. The node includes a node identifier and a node label, and the edge includes node identifiers at two ends and an edge label. Then, the integration relationship knowledge graph maintenance subsystem 101 stores the integration relationship knowledge graph.

202: Perform integration relationship evaluation on the cloud service architecture based on integration relationship information, where the integration relationship information includes: types of, a communication mode between, and communication content between the first cloud service and the second cloud service.

In a process of performing integration relationship evaluation on the cloud service architecture based on the integration relationship information, the cloud service architecture quality evaluation system 10 evaluates the integration relationship between the first cloud service and the second cloud service based on at least one of the following integration relationship information: the types of the first cloud service and the second cloud service, the communication mode between the first cloud service and the second cloud service, and the communication content between the first cloud service and the second cloud service, where the communication content between the first cloud service and the second cloud service includes at least one of the following: communication data content between the first cloud service and the second cloud service, and a communication data format between the first cloud service and the second cloud service, and the communication mode between the first cloud service and the second cloud service includes at least one of the following: a communication protocol between the first cloud service and the second cloud service, and a communication path between the first cloud service and the second cloud service.

The type is a category of the cloud service. The communication mode and the communication content are properties related to the cloud service and the integration relationship between the cloud services. The communication content includes the communication data content and the communication data format, and the communication content indicates a node label of the cloud service. The communication mode includes the communication protocol and the communication path, and the communication mode indicates an integration type of the integration relationship between the cloud services. The communication protocol is, for example, the network protocol integration in Table 1, and the communication path is, for example, the middleware integration in Table 1. It should be noted that the integration relationship information may also be referred to as information in the integration relationship knowledge graph, and the integration relationship knowledge graph is used to store the integration relationship information.

In a cloud service architecture design process of the cloud service architecture quality evaluation system 10, the cloud service architecture design subsystem 102 may invoke the cloud service architecture evaluation subsystem 103 to perform quality evaluation on the cloud service architecture. Specifically, the cloud service architecture evaluation subsystem 103 performs quality evaluation on the cloud service architecture based on the integration relationship knowledge graph, to generate a quality evaluation result, where the integration relationship knowledge graph indicates an integration rule between different cloud services, and the integration rule includes one or more of the following: an integration relationship type and an integration relationship priority.

In a possible implementation, in a process in which the cloud service architecture evaluation subsystem 103 performs quality evaluation on the cloud service architecture, the cloud service architecture evaluation subsystem 103 performs integration relationship parsing on the cloud service architecture to obtain the integration relationship between the cloud services in the cloud service architecture, and performs retrieval in the integration relationship knowledge graph based on the integration relationship between the cloud services to determine an associated integration relationship in the integration relationship knowledge graph, where the associated integration relationship is used to evaluate design quality of the integration relationship between the cloud services in the cloud service architecture. The cloud service architecture evaluation subsystem 103 generates the quality evaluation result based on the associated integration relationship and the integration relationship between the cloud services.

Specifically, in a process in which the cloud service architecture evaluation subsystem 103 generates the quality evaluation result based on the associated integration relationship and the integration relationship between the cloud services, the cloud service architecture evaluation subsystem 103 performs retrieval and comparison on the associated integration relationship based on the integration relationship between the cloud services. After finding an associated integration relationship whose similarity to the integration relationship is less than a threshold, the cloud service architecture evaluation subsystem 103 further determines an integration relationship priority corresponding to the associated integration relationship. The cloud service architecture evaluation subsystem 103 determines the quality evaluation result of the integration relationship between the cloud services based on the integration relationship priority.

It may be understood that the cloud service architecture includes one or more integration relationships between cloud services. The cloud service architecture evaluation subsystem 103 may generate one quality evaluation result based on each integration relationship, and the cloud service architecture evaluation subsystem 103 may generate a total quality evaluation result of the cloud service architecture based on the quality evaluation result of each integration relationship in the cloud service architecture.

In a possible implementation, the quality evaluation result includes one or more of the following: the integration relationship is unknown, the integration relationship is forbidden, the integration relationship is not recommended, the integration relationship is optional, the integration relationship is preferred, and the integration relationship is mandatory. That the integration relationship is unknown means that the integration relationship is not found in the knowledge graph.

In a possible implementation, when the integration relationship evaluation result is that the integration relationship is forbidden or the integration relationship is not recommended, a compute device displays, to the user, a reason why the integration relationship is forbidden or the integration relationship is not recommended. That is, when displaying the integration relationship evaluation result, the compute device may display an evaluation result description corresponding to the integration relationship evaluation result. The evaluation result description may explain an evaluation basis of the integration relationship evaluation result. The compute device may further display, to the user, a corresponding modification suggestion for the integration relationship being forbidden or the integration relationship being not recommended.

It may be understood that the quality evaluation result of each integration relationship in the cloud service architecture corresponds to one quality score, and the cloud service architecture evaluation subsystem 103 may calculate a total quality score of the cloud service architecture based on the integration relationship included in the cloud service architecture.

Table 5 shows a correspondence between a quality evaluation result and a quality score according to an embodiment of this application. It can be learned from the example shown in Table 5 that a higher score of the cloud service architecture indicates lower quality of the cloud service architecture. For example, quality scores corresponding to the integration relationship being unknown and the integration relationship being forbidden are 10, a quality score corresponding to the integration relationship being not recommended is 3, a quality score corresponding to the integration relationship being optional is 0.1, and quality scores corresponding to the integration relationship being preferred and the integration relationship being mandatory are 0.

**Table 5**

| Quality evaluation result | Quality score |
|---|---|
| The integration relationship is unknown | 10 |
| The integration relationship is forbidden | 10 |
| The integration relationship is not recommended | 3 |
| The integration relationship is optional | 0.1 |
| The integration relationship is preferred or the integration relationship is mandatory | 0 |

Still refer to FIG. 3b. In step c to step h in the example shown in FIG. 3b, in a process of designing the cloud service architecture by the user, the user may invoke a quality evaluation interface provided by the cloud service architecture evaluation subsystem 103, to perform quality evaluation on the currently designed cloud service architecture. The cloud service architecture evaluation subsystem 103 parses the cloud service architecture to obtain the integration relationship between the cloud services in the cloud service architecture.

In the example shown in FIG. 3b, after obtaining the integration relationship between the cloud services in the cloud service architecture through parsing, the cloud service architecture evaluation subsystem 103 may invoke the integration relationship knowledge graph stored in the integration relationship knowledge graph maintenance subsystem 101, search the knowledge graph for an associated integration relationship related to the cloud service architecture, perform comparison, determine the quality evaluation result of the integration relationship between the cloud services in the cloud service architecture based on an integration relationship type and an integration relationship priority that correspond to the associated integration relationship, and return the quality evaluation result to the user.

In a possible implementation, in this embodiment of this application, the cloud service architecture diagram designed by the user on the display interface may be stored as standard structured data. In this way, in a process of parsing the cloud service architecture, the cloud service architecture evaluation subsystem 103 may parse the structured data corresponding to the cloud service architecture, to obtain all integration relationships in the cloud service architecture.

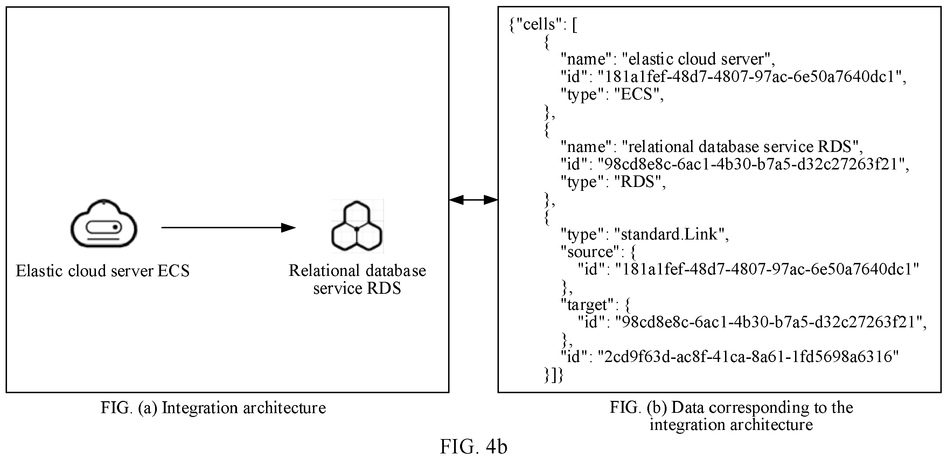

FIG. 4b is a diagram of a cloud service architecture and structured data according to an embodiment of this application. In the example shown in FIG. 4b, FIG. (a) shows the cloud service architecture designed by the user on the display interface. The cloud service architecture includes an integration relationship between an elastic cloud server and a relational database service. FIG. (b) shows the structured data corresponding to the cloud service architecture.

In the structured data in FIG. (b), a type field "standard.Link" indicates the integration relationship between the elastic cloud server and the relational database service. In a process of parsing the cloud service architecture, the cloud service architecture evaluation subsystem 103 reads an element whose type field is "standard.Link", to obtain the integration relationship in the cloud service architecture.

203: Display the integration relationship evaluation result of the cloud service architecture.

After generating the integration relationship evaluation result of the cloud service architecture, the cloud service architecture evaluation subsystem 103 may display the integration relationship evaluation result on the display interface of the cloud service platform. The integration relationship evaluation result is also referred to as a quality evaluation result, and the quality evaluation result indicates a quality score of one or more integration relationships in the cloud service architecture.

In a possible implementation, the cloud service architecture evaluation subsystem 103 may display a quality evaluation interface on the display interface, where the quality evaluation interface is used to provide the quality evaluation result of the integration relationship in the cloud service architecture in real time in a design process of the cloud service architecture. In the design process of the cloud service architecture, the cloud service architecture design subsystem 102 may invoke the cloud service architecture evaluation subsystem 103 in real time to perform quality evaluation on a cloud service architecture that is being designed, to generate a quality evaluation result.

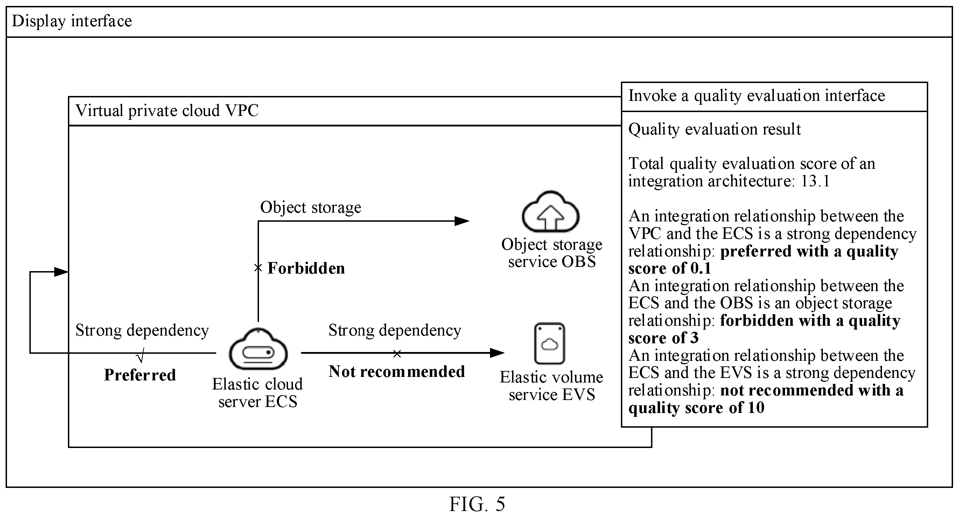

FIG. 5 is a diagram of designing a cloud service architecture according to an embodiment of this application. In the example shown in FIG. 5, when designing the cloud service architecture, the user can invoke the cloud service architecture evaluation subsystem 103 in real time to generate a quality evaluation result of the cloud service architecture. For example, the user creates a virtual private cloud VPC, and further creates an elastic cloud server ECS, an elastic volume service EVS, and an object storage service OBS in the virtual private cloud. In addition, the user sets a strong dependency relationship between the virtual private cloud and the elastic cloud server in the cloud service architecture, sets a strong dependency relationship between the elastic cloud server and the elastic volume service, and sets an object storage integration relationship between the elastic cloud server and the object storage service.

In the example shown in FIG. 5, the user may invoke the quality evaluation interface of the architecture evaluation subsystem 103 to perform quality evaluation on a cloud service architecture that has been designed, to generate a quality evaluation result corresponding to the cloud service architecture. The architecture evaluation subsystem 103 may generate a total quality score of the cloud service architecture and a quality score of each integration relationship in the cloud service architecture. For example, the total quality score of the cloud service architecture shown in FIG. 5 is 13.1. The integration relationship between the virtual private cloud VPC and the elastic cloud server ECS is a preferred integration relationship, and a quality score is 0.1. The integration relationship between the elastic cloud server ECS and the elastic volume service EVS is an integration relationship that is not recommended, and a quality score is 3. The integration relationship between the elastic cloud server ECS and the object storage service OBS is a forbidden integration relationship, and a quality score is 10.

In the example shown in FIG. 5, the architecture evaluation subsystem 103 may mark the integration relationship on the display interface based on the quality evaluation result of the cloud service architecture. For example, on the display interface of the cloud service architecture design, the architecture evaluation subsystem 103 may mark the current integration relationship between the virtual private cloud and the elastic cloud server as the preferred integration relationship, mark the integration relationship between the elastic cloud server and the elastic volume service as the integration relationship that is not recommended, and mark the integration relationship between the elastic cloud server and the object storage service as the forbidden integration relationship.

In a possible implementation, the architecture evaluation subsystem 103 may provide a recommended integration relationship of the cloud service architecture on the display interface based on the quality evaluation interface, and the recommended integration relationship is determined based on the integration relationship knowledge graph. Further, the architecture evaluation subsystem 103 may recommend, on the display interface based on the quality evaluation interface, a cloud graphical element associated with the integration relationship.

It may be understood that the architecture evaluation subsystem 103 may provide a recommended integration relationship for an integration relationship in the cloud service architecture that has been designed, where the recommended integration relationship is a modification suggestion for the integration relationship that has been designed. The architecture evaluation subsystem 103 may also provide a recommended integration relationship for the cloud service architecture that is being designed, where the recommended integration relationship may guide the cloud service architecture design.

For example, in a possible implementation, the compute device provides a dependency relationship evaluation result between the first cloud service and a third cloud service based on dependency relationship information, where the third cloud service may be a cloud service to be designed or recommended by the user, and the dependency relationship information includes at least one of the following: a strong dependency relationship and a recommended dependency relationship, the strong dependency relationship is that at least one of the first cloud service and the third cloud service exists by being bound to another cloud service, and the recommended dependency relationship is that at least one of the first cloud service and the third cloud service is recommended to coexist with another cloud service. The compute device displays the dependency relationship evaluation result between the first cloud service and the third cloud service to the user, where the dependency relationship evaluation result includes at least one of the following: lacking at least one cloud service, and recommending adding at least one cloud service. For example, the user selects only one cloud graphical element corresponding to the first cloud service on the cloud architecture editing interface, and does not select a cloud graphical element corresponding to the third cloud service. The compute device may provide a dependency relationship evaluation result of the cloud architecture, and the dependency relationship evaluation result is "the first cloud service in the cloud architecture lacks the third cloud service".

That is, the dependency relationship evaluation result may indicate a modification suggestion for the integration relationship. The dependency relationship information may also be referred to as information in the integration relationship knowledge graph, and the integration relationship knowledge graph is used to store the dependency relationship information.

In a possible implementation, the compute device displays the recommended integration relationship, where the recommended integration relationship includes at least two cloud services, and an evaluation result of the recommended integration relationship takes priority over an integration relationship evaluation result between the first cloud service and the second cloud service.

For example, the user designs, on the cloud architecture editing interface, a cloud architecture including the first cloud service and the second cloud service. The compute device displays a recommended integration relationship between other cloud services based on the cloud architecture. An evaluation result of the recommended integration relationship in the cloud architecture takes priority over the integration relationship evaluation result between the first cloud service and the second cloud service. Therefore, the user may select the recommended integration relationship to replace the integration relationship between the first cloud service and the second cloud service.

In a possible implementation, the compute device displays a recommended integration relationship set, where the recommended integration relationship set includes a first recommended integration relationship and a second recommended integration relationship, in the recommended integration relationship set, the first recommended integration relationship takes priority over the second recommended integration relationship in terms of displaying, and an evaluation result of the first recommended integration relationship takes priority over an evaluation result of the second recommended integration relationship, that is, the recommended integration relationships in the recommended integration relationship set may be sorted based on a recommendation program for display.

For example, the user designs, on the cloud architecture editing interface, the cloud architecture including the first cloud service and the second cloud service. The compute device displays the recommended integration relationship set based on the cloud architecture. The recommended integration relationship set includes a plurality of recommended integration relationships. The plurality of recommended integration relationships are sorted based on evaluation results of the integration relationships for display, and a recommended integration relationship with a high recommendation degree in the evaluation results is preferentially displayed.

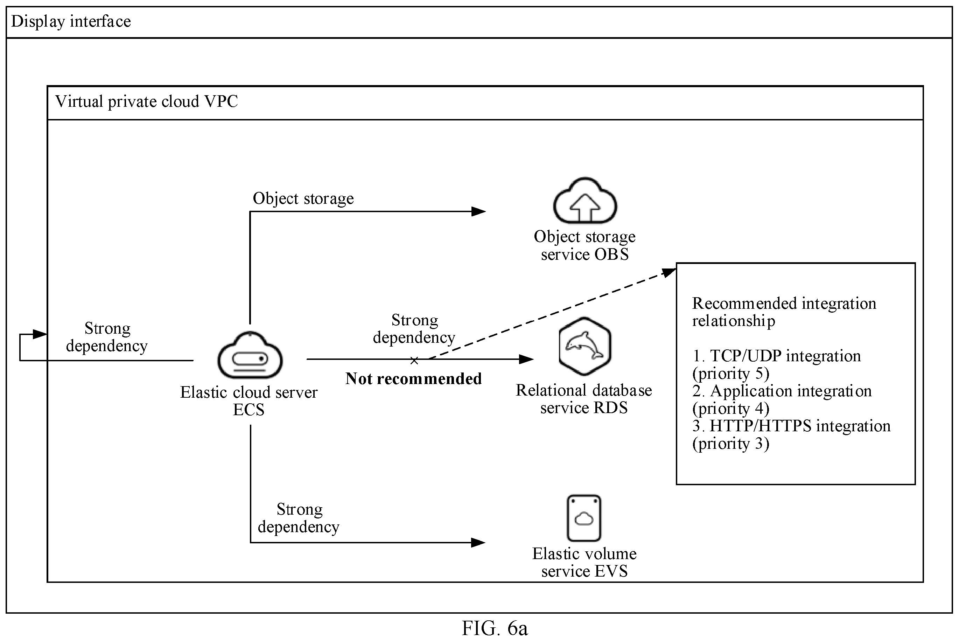

FIG. 6a is a diagram of providing a recommended integration relationship on a display interface according to an embodiment of this application. In the example shown in FIG. 6a, after designing the cloud service architecture, the user invokes the cloud service architecture evaluation subsystem 103 to perform quality evaluation on the cloud service architecture, and the cloud service architecture evaluation subsystem 103 provides the recommended integration relationship for the integration relationship in the cloud service architecture.

For example, in the example shown in FIG. 6a, the cloud service architecture designed by the user includes an elastic cloud server and a relational database service, and an integration relationship between the cloud server and the relational database service is set to object storage. A quality evaluation result of the cloud service architecture evaluation subsystem 103 on the integration relationship is that the integration relationship is not recommended. In addition, the cloud service architecture evaluation subsystem 103 further provides a plurality of recommended integration relationships for the integration relationship. The plurality of recommended integration relationships are sorted based on recommendation degrees, and the plurality of recommended integration relationships include TCP/UDP integration, application integration, and HTTP/HTTPS integration.

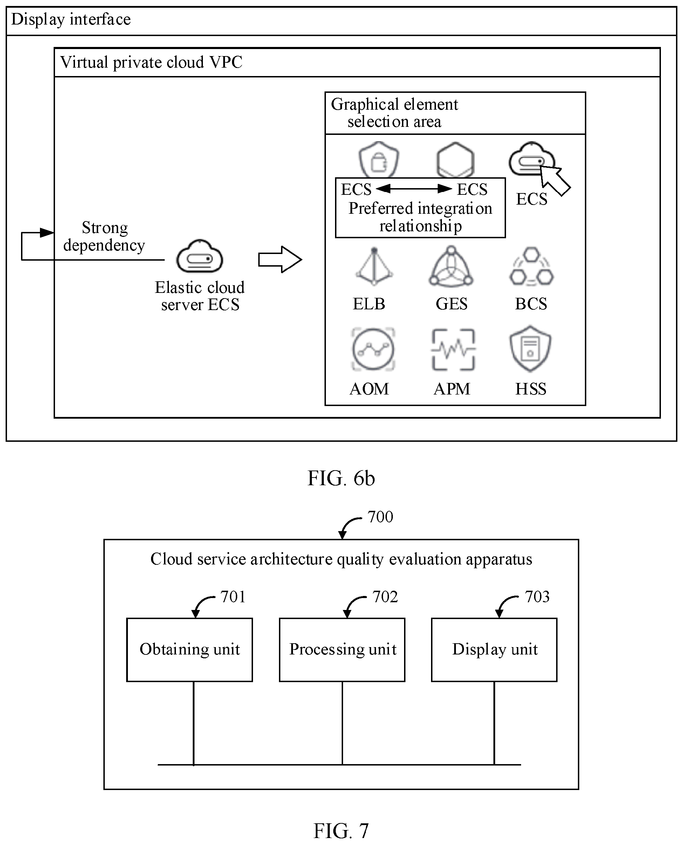

FIG. 6b is another diagram of providing a recommended integration relationship on a display interface according to an embodiment of this application. In the example shown in FIG. 6b, in a process of designing the cloud service architecture, the user invokes the cloud service architecture evaluation subsystem 103 to provide the recommended integration relationship, and the user may further design the cloud service architecture based on the recommended integration relationship provided by the cloud service architecture evaluation subsystem 103.

For example, in the example shown in FIG. 6b, in a process in which the user designs the cloud service architecture on the display interface, after creating an elastic cloud server, the user may invoke the cloud service architecture evaluation subsystem 103 to provide the recommended integration relationship. The cloud service architecture evaluation subsystem 103 provides all cloud graphical elements that may have an integration relationship with the elastic cloud server, for example, an elastic cloud server ECS and an elastic load balance ELB service. The user may select a corresponding cloud graphical element from the cloud graphical elements for next creation.

In a possible implementation, when the score corresponding to the quality evaluation result is less than or equal to a score threshold, the cloud service architecture is submitted for cloud service architecture review and cloud service architecture verification. Specifically, after the cloud service architecture passes the quality evaluation performed by the cloud service architecture evaluation subsystem 103, the user may perform cloud service architecture review on the cloud service architecture. The cloud service architecture review is manual review. After passing the manual review, the cloud service architecture may be further verified. After passing the verification, the cloud service architecture may be delivered.

It can be learned from the foregoing embodiments that, in embodiments of this application, the compute device can perform, based on the integration relationship knowledge graph, quality evaluation on the cloud service architecture designed by the user, and display the quality evaluation result of the cloud service architecture on the display interface, thereby improving design quality and design efficiency of the cloud service architecture.

According to the foregoing method embodiments, embodiments of this application further provide a cloud service architecture quality evaluation apparatus. The following specifically describes the cloud service architecture quality evaluation apparatus provided in embodiments of this application.

FIG. 7 is a diagram of a structure of a cloud service architecture quality evaluation apparatus according to an embodiment of this application. In the example shown in FIG. 7, the cloud service architecture quality evaluation apparatus 700 is configured to implement the steps performed by the compute device in the foregoing embodiments. The cloud service architecture quality evaluation apparatus 700 includes an obtaining unit 701, a processing unit 702, and a display unit 703.

The display unit 703 is configured to display a cloud architecture editing interface, where the cloud architecture editing interface includes at least one graphical element selection area, the graphical element selection area includes at least one cloud graphical element, and the cloud graphical element corresponds to at least one cloud service. The obtaining unit 701 is configured to obtain a graphical element selection instruction of a user for a first cloud graphical element, where the first cloud graphical element corresponds to a first cloud service. The obtaining unit 701 is further configured to obtain a graphical element selection instruction of the user for a second cloud graphical element, where the second cloud graphical element corresponds to a second cloud service. The display unit 703 is further configured to display a cloud architecture diagram, where the cloud architecture diagram represents a cloud service architecture, the cloud architecture diagram includes the first cloud graphical element and the second cloud graphical element, there is an integration relationship between the first cloud service and the second cloud service in the cloud service architecture, and the integration relationship is represented in at least one of the following manners: a connection line between the first cloud graphical element and the second cloud graphical element in the cloud architecture diagram, and an inclusion relationship between the first cloud graphical element and the second cloud graphical element in the cloud architecture diagram. The processing unit 702 is configured to evaluate the integration relationship between the first cloud service and the second cloud service based on at least one of the following information: types of the first cloud service and the second cloud service, a communication mode between the first cloud service and the second cloud service, and communication content between the first cloud service and the second cloud service, where the communication content between the first cloud service and the second cloud service includes at least one of the following: communication data content between the first cloud service and the second cloud service, and a communication data format between the first cloud service and the second cloud service, and the communication mode between the first cloud service and the second cloud service includes at least one of the following: a communication protocol between the first cloud service and the second cloud service, and a communication path between the first cloud service and the second cloud service. The display unit 703 is further configured to display an integration relationship evaluation result between the first cloud service and the second cloud service to the user.

In a possible implementation, the processing unit 702 is further configured to provide a dependency relationship evaluation result between the first cloud service and a third cloud service based on dependency relationship information, where the dependency relationship information includes at least one of the following: a strong dependency relationship and a recommended dependency relationship, the strong dependency relationship is that at least one of the first cloud service and the third cloud service exists by being bound to another cloud service, and the recommended dependency relationship is that at least one of the first cloud service and the third cloud service is recommended to coexist with another cloud service. The display unit 703 is further configured to display the dependency relationship evaluation result between the first cloud service and the third cloud service to the user, where the dependency relationship evaluation result includes at least one of the following: lacking at least one cloud service, and recommending adding at least one cloud service.

In a possible implementation, the processing unit 702 is further configured to: parse the cloud service architecture to obtain an integration relationship between cloud services included in the cloud service architecture; and perform integration relationship retrieval in an integration relationship knowledge graph based on the integration relationship between the cloud services, to determine an associated integration relationship, where the associated integration relationship is used to determine an integration relationship evaluation result between the cloud services, and the integration relationship knowledge graph is used to store an integration relationship between different cloud services.

In a possible implementation, the processing unit 702 is further configured to construct the integration relationship knowledge graph based on integration relationship data, where the integration relationship knowledge graph includes a node and an edge, the node represents a cloud service, the edge represents an integration relationship between cloud services, and the integration relationship data between cloud services includes historical integration relationship data between different cloud services.

In a possible implementation, the integration relationship evaluation result includes one or more of the following: the integration relationship is unknown, the integration relationship is forbidden, the integration relationship is not recommended, the integration relationship is optional, and the integration relationship is preferred.

In a possible implementation, the display unit 703 is further configured to: when the integration relationship evaluation result is that the integration relationship is forbidden or the integration relationship is not recommended, display, to the user, a reason why the integration relationship is forbidden or the integration relationship is not recommended.

In a possible implementation, there is a mapping relationship between the integration relationship evaluation result and an integration relationship quality score, and a recommendation degree in the integration relationship evaluation result is associated with the integration relationship quality score.

In a possible implementation, the processing unit 702 is further configured to: provide a quality evaluation interface, where the quality evaluation interface is used to perform integration relationship evaluation on different cloud service architectures; and receive an integration relationship evaluation request through the quality evaluation interface, and send, through the quality evaluation interface, an integration relationship evaluation result corresponding to the integration relationship evaluation request.

In a possible implementation, the processing unit 702 is further configured to: when the integration relationship quality score corresponding to the integration relationship evaluation result is greater than a score threshold, re-modify the cloud service architecture; or when the integration relationship quality score corresponding to the integration relationship evaluation result is less than or equal to the score threshold, submit the cloud service architecture for cloud service architecture review and cloud service architecture verification.

In a possible implementation, the display unit 703 is further configured to display a recommended integration relationship, where the recommended integration relationship includes at least two cloud services, and an evaluation result of the recommended integration relationship takes priority over the integration relationship evaluation result between the first cloud service and the second cloud service.

In a possible implementation, the display unit 703 is further configured to display a recommended integration relationship set, where the recommended integration relationship set includes a first recommended integration relationship and a second recommended integration relationship, in the recommended integration relationship set, the first recommended integration relationship takes priority over the second recommended integration relationship in terms of displaying, and an evaluation result of the first recommended integration relationship takes priority over an evaluation result of the second recommended integration relationship.

It may be understood that the obtaining unit 701, the processing unit 702, and the display unit 703 in the cloud service architecture quality evaluation apparatus 700 may be used as functional modules and have a mapping relationship with the subsystems in the cloud service architecture quality evaluation system 10 in FIG. 1, to implement functions of the modules in the cloud service architecture quality evaluation system 10.

It should be understood that division into the units in the apparatus is merely logical function division. During actual implementation, all or some of the units may be integrated into one physical entity or may be physically separated. In addition, all of the units in the apparatus may be implemented in a form of software invoked by a processing element, or may be implemented in a form of hardware; or some of the units may be implemented in a form of software invoked by a processing element, and some of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, the steps in the foregoing methods or the foregoing units may be implemented through a hardware integrated logic circuit in the processing element, or may be implemented in a form of software invoked by a processing element.

It should be noted that, for brief description, the foregoing method embodiments are represented as a series of actions. However, a person skilled in the art should know that this application is not limited to the described order of the actions. In addition, a person skilled in the art should also know that all embodiments described in this specification are example embodiments, and the related actions are not necessarily mandatory to this application.

Another appropriate step combination that can be figured out by a person skilled in the art based on the content described above also falls within the protection scope of this application. In addition, a person skilled in the art should also know that all embodiments described in this specification are example embodiments, and the related actions are not necessarily mandatory to this application.

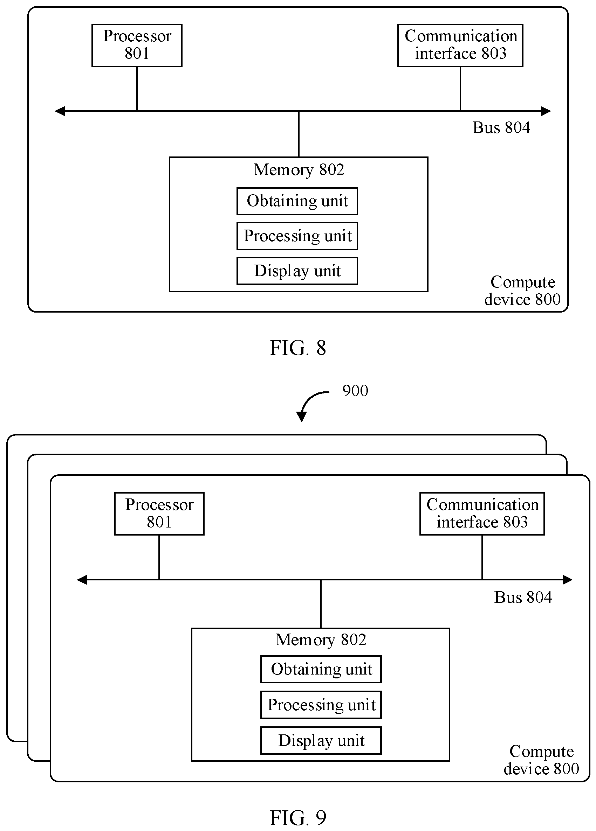

FIG. 8 is a diagram of a structure of a compute device according to an embodiment of this application. As shown in FIG. 8, the compute device 800 includes a processor 801, a memory 802, a communication interface 803, and a bus 804. The processor 801, the memory 802, and the communication interface 803 are coupled through the bus. The memory 802 stores instructions. When the executable instructions in the memory 802 are executed, the compute device 800 performs the method performed by the compute device in the foregoing method embodiments.

The compute device 800 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the units in the apparatus may be implemented in a form of a program scheduled by a processing element, the processing element may be a general-purpose processor, for example, a central processing unit (central processing unit, CPU) or another processor that may invoke the program. For another example, the units may be integrated and implemented in a form of a system-on-a-chip (system-on-a-chip, SoC).

The processor 801 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The memory 802 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 802 stores executable program code, and the processor 801 executes the executable program code to separately implement functions of the foregoing units or modules, so as to implement the foregoing cloud service architecture quality evaluation method. In other words, the memory 802 stores instructions used to perform the foregoing cloud service architecture quality evaluation method.

The communication interface 803 uses a transceiver module, for example, but not limited to, a network interface card or a transceiver, to implement communication between the compute device 800 and another device or a communication network.

In addition to a data bus, the bus 804 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The bus may be classified into an address bus, a data bus, a control bus, and the like.

FIG. 9 is a diagram of a compute device cluster according to an embodiment of this application. As shown in FIG. 9, the compute device cluster 900 includes at least one compute device 800.

The memory 802 in one or more compute devices 800 in the compute device cluster 900 may store same instructions used to perform the foregoing cloud service architecture quality evaluation method.

In some possible implementations, alternatively, the memory 802 in the one or more compute devices 800 in the compute device cluster 900 may separately store some instructions used to perform the foregoing cloud service architecture quality evaluation method. In other words, a combination of the one or more compute devices 800 may jointly execute the instructions used to perform the foregoing cloud service architecture quality evaluation method.

It should be noted that memories 802 in different compute devices 800 in the compute device cluster 900 may store different instructions, which are separately used to perform some functions of the foregoing task processing apparatus. In other words, the instructions stored in the memories 802 in different compute devices 800 may be used to implement functions of one or more modules in an obtaining unit, a processing unit, and a display unit.

In some possible implementations, the one or more compute devices 800 in the compute device cluster 900 may be connected through a network. The network may be a wide area network, a local area network, or the like.

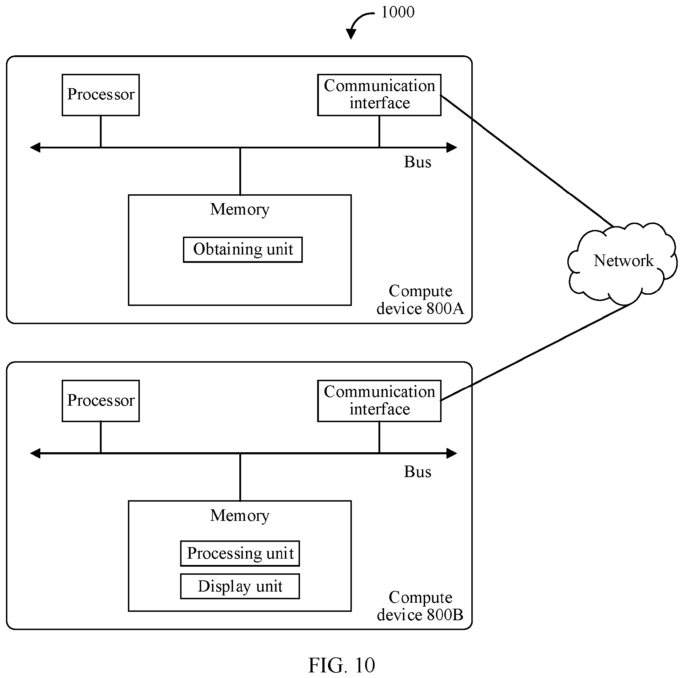

FIG. 10 is a diagram in which computer devices in a computer cluster are connected through a network according to an embodiment of this application. As shown in FIG. 10, two compute devices 800A and 800B are connected through a network. Specifically, each compute device is connected to the network through a communication interface in the compute device.

In a possible implementation, a memory in the compute device 800A stores instructions for performing a function of an obtaining unit. In addition, a memory in the compute device 800B stores instructions for executing functions of a processing unit and a display unit.

It should be understood that functions of the compute device 800A shown in FIG. 10 may alternatively be completed by a plurality of compute devices. Similarly, functions of the compute device 800B may alternatively be completed by a plurality of compute devices.

In another embodiment of this application, a computer-readable storage medium is further provided. The computer-readable storage medium stores computer-executable instructions. When a processor of a device executes the computer-executable instructions, the device performs the method performed by the compute device in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the compute device in the foregoing method embodiments.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A cloud service architecture quality evaluation method, wherein the method is applied to a cloud service platform, the cloud service platform is used to manage a cloud service architecture, the cloud service architecture comprises at least two cloud services, and the method comprises:
displaying a cloud architecture editing interface, wherein the cloud architecture editing interface comprises at least one graphical element selection area, the graphical element selection area comprises at least one cloud graphical element, and the cloud graphical element corresponds to at least one cloud service;
obtaining a graphical element selection instruction of a user for a first cloud graphical element, wherein the first cloud graphical element corresponds to a first cloud service;
obtaining a graphical element selection instruction of the user for a second cloud graphical element, wherein the second cloud graphical element corresponds to a second cloud service;
displaying a cloud architecture diagram, wherein the cloud architecture diagram represents the cloud service architecture, the cloud architecture diagram comprises the first cloud graphical element and the second cloud graphical element, there is an integration relationship between the first cloud service and the second cloud service in the cloud service architecture, and the integration relationship is represented in at least one of the following manners: a connection line between the first cloud graphical element and the second cloud graphical element in the cloud architecture diagram, and an inclusion relationship between the first cloud graphical element and the second cloud graphical element in the cloud architecture diagram;
evaluating the integration relationship between the first cloud service and the second cloud service based on at least one of the following information: types of the first cloud service and the second cloud service, a communication mode between the first cloud service and the second cloud service, and communication content between the first cloud service and the second cloud service, wherein the communication content between the first cloud service and the second cloud service comprises at least one of the following: communication data content between the first cloud service and the second cloud service, and a communication data format between the first cloud service and the second cloud service, and the communication mode between the first cloud service and the second cloud service comprises at least one of the following: a communication protocol between the first cloud service and the second cloud service, and a communication path between the first cloud service and the second cloud service; and
displaying an integration relationship evaluation result between the first cloud service and the second cloud service to the user.

2. The method according to claim 1, wherein the method further comprises:
providing a dependency relationship evaluation result between the first cloud service and a third cloud service based on dependency relationship information, wherein the dependency relationship information comprises at least one of the following: a strong dependency relationship and a recommended dependency relationship, the strong dependency relationship is that at least one of the first cloud service and the third cloud service exists by being bound to another cloud service, and the recommended dependency relationship is that at least one of the first cloud service and the third cloud service is recommended to coexist with another cloud service; and
displaying the dependency relationship evaluation result between the first cloud service and the third cloud service to the user, wherein the dependency relationship evaluation result comprises at least one of the following: lacking at least one cloud service, and recommending adding at least one cloud service.

3. The method according to claim 1 or 2, wherein the method further comprises:
parsing the cloud service architecture to obtain an integration relationship between the cloud services comprised in the cloud service architecture; and
performing integration relationship retrieval in an integration relationship knowledge graph based on the integration relationship between the cloud services, to determine an associated integration relationship, wherein the associated integration relationship is used to determine an integration relationship evaluation result between the cloud services, and the integration relationship knowledge graph is used to store an integration relationship between different cloud services.

4. The method according to claim 3, wherein the method further comprises:
constructing the integration relationship knowledge graph based on integration relationship data, wherein the integration relationship knowledge graph comprises a node and an edge, the node represents a cloud service, the edge represents an integration relationship between cloud services, and the integration relationship data between cloud services comprises historical integration relationship data between different cloud services.

5. The method according to any one of claims 1 to 4, wherein the integration relationship evaluation result comprises one or more of the following: the integration relationship is unknown, the integration relationship is forbidden, the integration relationship is not recommended, the integration relationship is optional, and the integration relationship is preferred.

6. The method according to claim 5, wherein the method further comprises:
when the integration relationship evaluation result is that the integration relationship is forbidden or the integration relationship is not recommended, displaying, to the user, a reason why the integration relationship is forbidden or the integration relationship is not recommended.

7. The method according to claim 5, wherein there is a mapping relationship between the integration relationship evaluation result and an integration relationship quality score, and a recommendation degree in the integration relationship evaluation result is associated with the integration relationship quality score.

8. The method according to any one of claims 1 to 7, wherein the method further comprises:
providing a quality evaluation interface, wherein the quality evaluation interface is used to perform integration relationship evaluation on different cloud service architectures; and
receiving an integration relationship evaluation request through the quality evaluation interface, and sending, through the quality evaluation interface, an integration relationship evaluation result corresponding to the integration relationship evaluation request.

9. The method according to any one of claims 1 to 8, wherein the method further comprises:
when the integration relationship quality score corresponding to the integration relationship evaluation result is greater than a score threshold, re-modifying the cloud service architecture; or
when the integration relationship quality score corresponding to the integration relationship evaluation result is less than or equal to the score threshold, submitting the cloud service architecture for cloud service architecture review and cloud service architecture verification.

10. The method according to any one of claims 1 to 9, wherein the method further comprises:
displaying a recommended integration relationship, wherein the recommended integration relationship comprises at least two cloud services, and an evaluation result of the recommended integration relationship takes priority over the integration relationship evaluation result between the first cloud service and the second cloud service.

11. The method according to any one of claims 1 to 10, wherein the method further comprises:
displaying a recommended integration relationship set, wherein the recommended integration relationship set comprises a first recommended integration relationship and a second recommended integration relationship, in the recommended integration relationship set, the first recommended integration relationship takes priority over the second recommended integration relationship in terms of displaying, and an evaluation result of the first recommended integration relationship takes priority over an evaluation result of the second recommended integration relationship.

12. A cloud service architecture quality evaluation apparatus, wherein the apparatus is used in a cloud service platform, the cloud service platform is used to manage a cloud service architecture, the cloud service architecture comprises at least two cloud services, and the apparatus comprises:
a display unit, configured to display a cloud architecture editing interface, wherein the cloud architecture editing interface comprises at least one graphical element selection area, the graphical element selection area comprises at least one cloud graphical element, and the cloud graphical element corresponds to at least one cloud service;
an obtaining unit, configured to obtain a graphical element selection instruction of a user for a first cloud graphical element, wherein the first cloud graphical element corresponds to a first cloud service, wherein
the obtaining unit is further configured to obtain a graphical element selection instruction of the user for a second cloud graphical element, wherein the second cloud graphical element corresponds to a second cloud service; and
the display unit is further configured to display a cloud architecture diagram, wherein the cloud architecture diagram represents the cloud service architecture, the cloud architecture diagram comprises the first cloud graphical element and the second cloud graphical element, there is an integration relationship between the first cloud service and the second cloud service in the cloud service architecture, and the integration relationship is represented in at least one of the following manners: a connection line between the first cloud graphical element and the second cloud graphical element in the cloud architecture diagram, and an inclusion relationship between the first cloud graphical element and the second cloud graphical element in the cloud architecture diagram; and
a processing unit, configured to evaluate the integration relationship between the first cloud service and the second cloud service based on at least one of the following information: types of the first cloud service and the second cloud service, a communication mode between the first cloud service and the second cloud service, and communication content between the first cloud service and the second cloud service, wherein the communication content between the first cloud service and the second cloud service comprises at least one of the following: communication data content between the first cloud service and the second cloud service, and a communication data format between the first cloud service and the second cloud service, and the communication mode between the first cloud service and the second cloud service comprises at least one of the following: a communication protocol between the first cloud service and the second cloud service, and a communication path between the first cloud service and the second cloud service, wherein
the display unit is further configured to display an integration relationship evaluation result between the first cloud service and the second cloud service to the user.

13. The apparatus according to claim 12, wherein the processing unit is further configured to:
provide a dependency relationship evaluation result between the first cloud service and a third cloud service based on dependency relationship information, wherein the dependency relationship information comprises at least one of the following: a strong dependency relationship and a recommended dependency relationship, the strong dependency relationship is that at least one of the first cloud service and the third cloud service exists by being bound to another cloud service, and the recommended dependency relationship is that at least one of the first cloud service and the third cloud service is recommended to coexist with another cloud service; and
the display unit is further configured to display the dependency relationship evaluation result between the first cloud service and the third cloud service to the user, wherein the dependency relationship evaluation result comprises at least one of the following: lacking at least one cloud service, and recommending adding at least one cloud service.

14. The apparatus according to claim 12 or 13, wherein the processing unit is further configured to:
parse the cloud service architecture to obtain an integration relationship between the cloud services comprised in the cloud service architecture; and
perform integration relationship retrieval in an integration relationship knowledge graph based on the integration relationship between the cloud services, to determine an associated integration relationship, wherein the associated integration relationship is used to determine an integration relationship evaluation result between the cloud services, and the integration relationship knowledge graph is used to store an integration relationship between different cloud services.

15. The apparatus according to claim 14, wherein the processing unit is further configured to:
construct the integration relationship knowledge graph based on integration relationship data, wherein the integration relationship knowledge graph comprises a node and an edge, the node represents a cloud service, the edge represents an integration relationship between cloud services, and the integration relationship data between cloud services comprises historical integration relationship data between different cloud services.

16. The apparatus according to any one of claims 12 to 15, wherein the integration relationship evaluation result comprises one or more of the following: the integration relationship is unknown, the integration relationship is forbidden, the integration relationship is not recommended, the integration relationship is optional, and the integration relationship is preferred.

17. The apparatus according to claim 16, wherein the display unit is further configured to:
when the integration relationship evaluation result is that the integration relationship is forbidden or the integration relationship is not recommended, display, to the user, a reason why the integration relationship is forbidden or the integration relationship is not recommended.

18. The apparatus according to claim 16, wherein there is a mapping relationship between the integration relationship evaluation result and an integration relationship quality score, and a recommendation degree in the integration relationship evaluation result is associated with the integration relationship quality score.

19. The apparatus according to any one of claims 12 to 18, wherein the processing unit is further configured to:
provide a quality evaluation interface, wherein the quality evaluation interface is used to perform integration relationship evaluation on different cloud service architectures; and
receive an integration relationship evaluation request through the quality evaluation interface, and send, through the quality evaluation interface, an integration relationship evaluation result corresponding to the integration relationship evaluation request.

20. The apparatus according to any one of claims 12 to 19, wherein the processing unit is further configured to:
when the integration relationship quality score corresponding to the integration relationship evaluation result is greater than a score threshold, re-modify the cloud service architecture; or
when the integration relationship quality score corresponding to the integration relationship evaluation result is less than or equal to the score threshold, submit the cloud service architecture for cloud service architecture review and cloud service architecture verification.

21. The apparatus according to any one of claims 12 to 20, wherein the display unit is further configured to:
display a recommended integration relationship, wherein the recommended integration relationship comprises at least two cloud services, and an evaluation result of the recommended integration relationship takes priority over the integration relationship evaluation result between the first cloud service and the second cloud service.

22. The apparatus according to any one of claims 12 to 21, wherein the display unit is further configured to:
display a recommended integration relationship set, wherein the recommended integration relationship set comprises a first recommended integration relationship and a second recommended integration relationship, in the recommended integration relationship set, the first recommended integration relationship takes priority over the second recommended integration relationship in terms of displaying, and an evaluation result of the first recommended integration relationship takes priority over an evaluation result of the second recommended integration relationship.

23. A compute device cluster, comprising at least one compute device, wherein the compute device comprises a processor, the processor is coupled to a memory, the memory is configured to store instructions, and when the instructions are executed by the processor, the compute device cluster is enabled to perform the method according to any one of claims 1 to 11.

24. A computer-readable storage medium, wherein the computer-readable storage medium stores instructions, and when the instructions are executed, a computer is enabled to perform the method according to any one of claims 1 to 11.

25. A computer program product, wherein the computer program product comprises instructions, and when the instructions are executed, a computer is enabled to implement the method according to any one of claims 1 to 11.
